(19) **Europäisches Patentamt / European Patent Office / Office européen des brevets**

(11) **EP 4 633 158 A1**

(12) **EUROPEAN PATENT APPLICATION**
published in accordance with Art. 153(4) EPC

(43) Date of publication:
15.10.2025 Bulletin 2025/42

(21) Application number: 23899793.6

(22) Date of filing: 23.11.2023

(51) International Patent Classification (IPC):
$H04N\ 19/146^{(2014.01)}$    $H04N\ 19/164^{(2014.01)}$
$H04N\ 19/152^{(2014.01)}$    $H04N\ 21/2343^{(2011.01)}$

(52) Cooperative Patent Classification (CPC):
H04N 19/146; H04N 19/152; H04N 19/164;
H04N 19/42; H04N 21/2343; H04N 21/2662

(86) International application number:
PCT/CN2023/133721

(87) International publication number:
WO 2024/120214 (13.06.2024 Gazette 2024/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 08.12.2022 CN 202211576455

(71) Applicant: BIGO TECHNOLOGY PTE. LTD.
Singapore 117440 (SG)

(72) Inventors:
• CHEN, Junkui
Guangzhou, Guangdong 511442 (CN)
• XIE, Lan
Beijing 100102 (CN)

(74) Representative: Yang, Shu
Withers & Rogers LLP
2 London Bridge
London SE1 9RA (GB)

(54) **CODING CONTROL METHOD AND APPARATUS, AND DEVICE, STORAGE MEDIUM AND PRODUCT**

(57)    Provided in the embodiments of the present application are a coding control method and apparatus, and a device, a storage medium and a product. The technical solution provided in the embodiments of the present application comprises: determining a codable bit rate according to an estimated bandwidth, a send buffer size, set delay limitation information and set bit rate control information; determining a pre-calculated frame rate according to the size of a single frame of an image; and according to the pre-calculated frame rate, performing frame rate adjustment on a collected first collected frame data stream, so as to obtain a second collected frame data stream. By means of adjusting a frame rate corresponding to a collected first collected frame data stream, fast adaptation to an estimated bandwidth of a transmission link and a send buffer size of a send queue is achieved at a frame level, such that it is possible to respond to a change in a network bandwidth in a timely manner, so as to reduce fluctuations in a send queue cache, thereby effectively improving the quality of image coding.

Acquiring an estimated bandwidth corresponding to a transmission link and a transmission buffer size corresponding to a transmission queue, and determining an encodable bitrate based on the estimated bandwidth, the transmission buffer size, predetermined delay limit information, and predetermined bitrate control information — S101

Acquiring a single-frame image size corresponding to encoding processing by an encoder, and determining a budget frame rate based on the encodable bitrate and the single-frame image size — S102

Acquiring a second capture frame data stream by adjusting a frame rate of a captured first capture frame data stream based on the budget frame rate — S103

FIG. 1

## Description

This application claims priority to Chinese Patent Application No. 202211576455.9, filed with China National Intellectual Property Administration on December 8, 2022, the disclosure of which is herein incorporated by reference in its entirety.

## TECHNICAL FIELD

The present disclosure relates to the technical field of image processing, and in particular, to a method, apparatus, and device for encoding control, and a storage medium and a product thereof.

## BACKGROUND

The network of a streamer possibly may be subject to various dynamic conditions during transmission of a live video stream. For example, an available bandwidth and a data transmission rate of the streamer change accordingly in cases where signal fluctuations occur under a mobile cellular network, network congestion arises due to a large number of accessed or connected users, signal fluctuations occur due to user mobility under a public Wi-Fi, or some other users connected to Wi-Fi perform operations, for example, data uploading, consuming the network resources. To ensure data streams of the streamer to be timely and effectively delivered to a video receiver, the streaming bitrate needs to be adjusted to adapt to the fluctuations in uplink bandwidth or transmission rate.

To improve the transmission efficiency and ensure the quality and smoothness of live streaming, a maximum transmission bitrate is generally calculated based on the network estimated bandwidth and the transmission rate, configured bitrate and frame rate for encoding are determined based on the current resolution, and the encode parameters are reset for the encoder in the cycle of one group of images (GOP). Due to the dependence relationships between the encoded frames, the deletion of the frame data is performed by taking one group of images as a unit. That is, the minimum adjustment resolution for adjusting the encode parameters is one group of images, and in a case where the network bandwidth changes during the generation of a group of images, the image encode bitrate cannot be adjusted timely to correspond to the changes in the network bandwidth, the cache of the transmission queue likely fluctuates, and the image encode quality is poor.

## SUMMARY

Embodiments of the present disclosure provide a method, apparatus, and device for encoding control, and a storage medium and a product thereof, to solve the technical problems in the related art that the image encode bitrate cannot timely respond to changes in network bandwidth, the cache of the transmission queue likely fluctuates, and the image encode quality is poor, so as to timely respond to changes in the network bandwidth, reduce fluctuations in the transmission queue cache, and effectively improve the image encode quality.

According to a first aspect, the embodiments of the present disclosure provide a method for encoding control, the method including:

acquiring an estimated bandwidth corresponding to a transmission link and a transmission buffer size corresponding to a transmission queue, and determining an encodable bitrate based on the estimated bandwidth, the transmission buffer size, predetermined delay limit information, and predetermined bitrate control information;

acquiring a single-frame image size corresponding to encoding processing by an encoder, and determining a budget frame rate based on the encodable bitrate and the single-frame image size; and

acquiring a second capture frame data stream by adjusting a frame rate of a captured first capture frame data stream based on the budget frame rate.

According to a second aspect, the embodiments of the present disclosure provide an apparatus for encoding control, including a bitrate determining module, a frame rate determining module, and a frame rate adjusting module, wherein:

the bitrate determining module is configured to acquire an estimated bandwidth corresponding to a transmission link and a transmission buffer size corresponding to a transmission queue, and determine an encodable bitrate based on the estimated bandwidth, the transmission buffer size, predetermined delay limit information, and predetermined bitrate control information;

the frame rate determining module is configured to acquire a single-frame image size corresponding to encoding processing by an encoder, and determine a budget frame rate based on the encodable bitrate and the single-frame image size; and

the frame rate adjusting module is configured to acquire a second capture frame data stream by adjusting a frame rate of a captured first capture frame data stream based on the budget frame rate.

According to a third aspect, the embodiments of the present disclosure provide a device for encoding control, the device including: a memory and one or more processors;

wherein the memory is configured to store one or more programs;

wherein the one or more programs, when loaded and run by the one or more processors, cause the one or more processors to perform the method for controlling the coding process as described in the first aspect.

According to a fourth aspect, the embodiments of the present disclosure provide a non-transitory storage medium storing one or more computer-executable instructions, wherein the one or more computer-executable instructions, when loaded and run by a processor of a computer, cause the computer to perform the method for encoding control as described in the first aspect.

According to a fifth aspect, the embodiments of the present disclosure provide a computer program product including one or more computer programs, wherein the one or more computer programs, when loaded and run by a processor, cause the processor to perform the method for encoding control as described in the first aspect.

According to the embodiments of the present disclosure, an encodable bitrate is determined based on the estimated bandwidth, the transmission buffer size, predetermined delay limit information, and predetermined bitrate control information, a budget frame rate is determined based on the single-frame image size, and a second capture frame data stream is acquired by adjusting a frame rate of a captured first capture frame data stream based on the budget frame rate. That is, the frame rate corresponding to the captured first capture frame data stream is adjusted to quickly adapt, at a frame level, to the estimated bandwidth of the transmission link and the transmission buffer size of the transmission queue, thereby timely corresponding to the changes in the network bandwidth, reducing the fluctuation of the transmission queue cache, and effectively improving the image encode quality.

**BRIEF** DESCRIPTION OF DRAWINGS

    FIG. 1 is a flowchart of a method for encoding control according to some embodiments of the present disclosure;
    FIG. 2 is a flowchart of an encodable bitrate determination process according to some embodiments of the present disclosure;
    FIG. 3 is a schematic diagram of an encoding control network structure according to some embodiments of the present disclosure;
    FIG. 4 is a schematic structural diagram of an apparatus for encoding control according to some embodiments of the present disclosure; and
    FIG. 5 is a schematic structural diagram of a device for encoding control according to some embodiments of the present disclosure.

**DETAILED DESCRIPTION**

To make the purpose, technical solutions, and advantages of the present disclosure clearer, specific embodiments of the present disclosure are described in detail hereinafter in conjunction with the accompanying drawings. It is understood that the specific embodiments described herein are only for the purpose of explaining the present disclosure, rather than constituting a limitation to the present disclosure. It is also to be noted that, for ease of description, only some, but not all, portions relevant to the present disclosure are shown in the accompanying drawings. Before discussing the exemplary embodiments in more detail, it should be noted that some exemplary embodiments are described as processes or methods depicted as flowcharts. Even the flowcharts depict the operations (or processes) as sequential processing, many of the operations are implemented in parallel, concurrently, or simultaneously in some other embodiments. In addition, the order of the operations is reset in some other embodiments. In some embodiments, the above processing is terminated in the case that its operations are completed, or there is an additional step not included in the accompanying drawings in some other embodiments. The above processing corresponds to a method, a function, a procedure, a subroutine, a subprogram, or the like.

In some embodiments, the method for encoding control provided in the present disclosure is applied to encoding processing of a capture frame data stream under a real-time live streaming scenario to quickly adapt, in a frame level, to the estimated bandwidth of the transmission link and the transmission buffer size of the transmission queue. The method aims, by determining a budget frame rate based on the estimated bandwidth and the transmission buffer size and adjusting the frame rate of a captured first capture frame data stream based on the budget frame rate, to timely respond to the changes in the network bandwidth, reduce the fluctuation of the transmission queue cache, and effectively improve the image encode quality. To respond to changes in network bandwidth, the conventional method generally updates the encode parameters of the encoder by taking one group of images as a period, and due to the dependency between the encoded frames, the deletion of the frame data needs to take one group of images as a unit, which results in that in the case that the network bandwidth changes during the generation of the group of images, the encoder cannot timely adjust the image encode bitrate to respond to the change in the network bandwidth, the cache of the transmission queue likely fluctuates or even be frozen, and the image encode quality is poor. In view of the above, the present disclosure provides a method for encoding control to solve the technical problems in the conventional responding method to the changes in the network bandwidth that the changes in the network bandwidth cannot be responded timely and the image encode quality is poor.

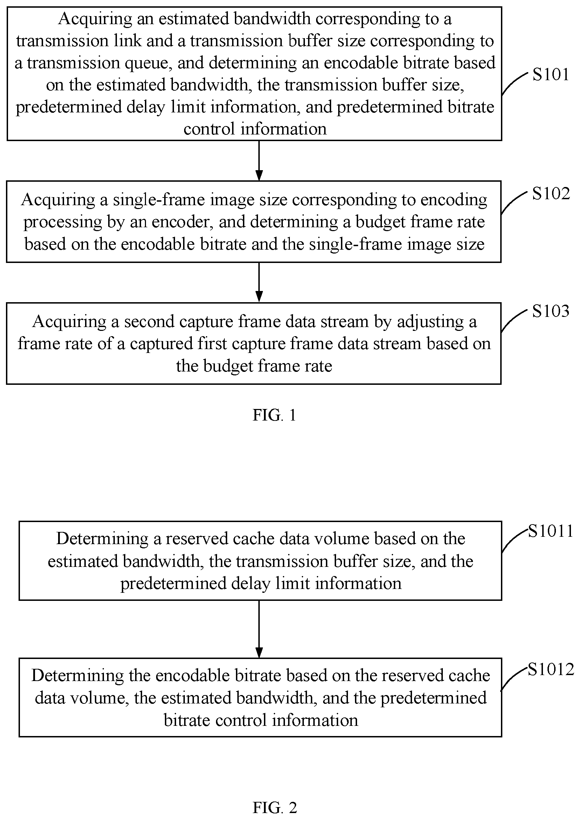

FIG. 1 is a flowchart of a method for encoding control according to some embodiments of the present disclosure, and the method for encoding control according to the embodiments of the present disclosure is applicable to an apparatus for encoding control, which is implemented by way of hardware and/or software and integrated into a device for encoding control.

The following description shows that the apparatus for encoding control performs the method for encoding control as an example. Referring to FIG. 1, the method for encoding control includes the following processes.

In S101: an estimated bandwidth corresponding to a transmission link and a transmission buffer size corresponding to a transmission queue are acquired, and an encodable bitrate is determined based on the estimated bandwidth, the transmission buffer size, predetermined delay limit information, and predetermined bitrate control information.

In some embodiments of the present disclosure, the estimated bandwidth corresponding to the transmission link is determined through a congestion control algorithm configured in a transmission window (transmission window or congestion control module), and the transmission buffer size corresponding to the transmission queue is determined by the transmission queue based on the data volume of the data cached in the transmission queue. The predetermined delay limit information is configured to indicate a limit to the data transmit delay, and the bitrate control information is configured to indicate an expected time precision for controlling the bitrate, i.e., the encode bitrate is adjusted by taking the time precision as a period.

In some embodiments, an estimated bandwidth corresponding to the transmission link is acquired from the transmission window, a transmission buffer size corresponding to the transmission queue is acquired from the transmission queue, predetermined delay limit information and predetermined bitrate control information are determined, and an encodable bitrate is calculated based on the estimated bandwidth, the transmission buffer size, the predetermined delay limit information, and the predetermined bitrate control information, wherein the encodable bitrate is understood as a maximum encode bitrate for encoding images under the current estimated bandwidth and the buffer size.

In some possible embodiments, as shown in the flowchart of an encodable bitrate determination process of FIG. 2, in the method for encoding control according to the present disclosure, determining the encodable bitrate based on the estimated bandwidth, the transmission buffer size, the predetermined delay limit information, and the predetermined bitrate control information includes the following processes.

In S1011: a reserved cache data volume is determined based on the estimated bandwidth, the transmission buffer size, and the predetermined delay limit information.

In S1012: the encodable bitrate is determined based on the reserved cache data volume, the estimated bandwidth, and the predetermined bitrate control information.

mation.

The predetermined delay limit information in the present solution is configured to indicate an upper limit (e.g., 180 ms) of delay time for transmitting data in the transmission queue, and the reserved cache data volume is configured to indicate a volume of the cache data that needs to be additionally transmitted under the predetermined delay limit information.

In some embodiments, the reserved cache data volume under the predetermined delay limit information is calculated based on the acquired estimated bandwidth, the transmission buffer size, and the predetermined delay limit information. Then, the encodable bitrate is calculated based on the above-determined reserved cache data volume, the estimated bandwidth, and the predetermined bitrate control information.

In some possible embodiments, the reserved cache data volume in the present disclosure is determined based on the following formula:

$$Cm_i = C_i - B_i * L_{max}$$

wherein $B_i$ represents the estimated bandwidth, $C_i$ represents the transmission buffer size, and $L_{max}$ represents the delay limit information;

In some possible embodiments, the encodable bitrate in the present disclosure is determined based on the following formula:

$$Br_i = \frac{B_i * T - Cm_i}{T}$$

wherein $T$ represents the bitrate control information. In some embodiments, the bitrate control information $T=0.8s$, i.e., the budget frame rate is correspondingly adjusted every 0.8s, thereby achieving the bitrate adjustment effect of correspondingly adjusting the encode bitrate every 0.8s.

In the present disclosure, the reserved cache data volume that needs to be additionally transmitted under the predetermined delay limit information is calculated, and the encodable bitrate is accurately determined based on the reserved cache data volume, the estimated bandwidth, and the bitrate control information. In existing methods that adapt to the changes in bandwidth by increasing the encode parameters, the bitrate output depends on the bitrate control strategy of the encoder. However, the bitrate control strategy of the encoder cannot timely satisfy the expected bitrate adjustment target and impacts the quality of the encoded frame (a group of images including a plurality of encoded frames) generated by encoding. The present disclosure, by controlling the outputs of the frame rate and bitrate, achieves precise control of the bitrate and the transmit delay on the premise of not changing the encode parameters and the encode quality.

In S102: a single-frame image size corresponding to the encoding process by the encoder is acquired, and a budget frame rate is determined based on the encodable bitrate and the single-frame image size.

In some embodiments, the single-frame image size in the present disclosure is understood as the size (data volume) of the encoded frame actually output by the encoder during the real-time encoding processing on the capture frame data stream, or the average size corresponding to various encoded frames in the group of images actually output.

In some embodiments, a single-frame image size corresponding to the encoding processing by the encoder is acquired, and a budget frame rate is calculated based on the above-determined encodable bitrate and the single-frame image size. In some embodiments, a ratio corresponding to the encodable bitrate and the single-frame image size is used as the budget frame rate, or in the case that the budget frame rate calculated based on the encodable bitrate and the single-frame image size is greater than a predetermined frame rate upper limit, the predetermined frame rate upper limit is determined as a current budget frame rate.

In some possible embodiments, in the method for encoding control of the present disclosure, determining the budget frame rate based on the encodable bitrate and the single-frame image size includes: determining a candidate frame rate based on the encodable bitrate and the single-frame image size; and determining the budget frame rate based on a predetermined frame rate constraint condition and the candidate frame rate.

In some embodiments, the candidate frame rate is calculated based on the encodable bitrate and the single-frame image size. In some embodiments, a ratio of the encodable bitrate and the single-frame image size is determined as the candidate frame rate. In some embodiments, the budget frame rate is determined based on the predetermined frame rate constraint condition and the candidate frame rate. In some embodiments, the frame rate constraint condition is expressed as a predetermined maximum output frame rate (e.g., 24fps) and a predetermined minimum output frame rate (e.g., 1fps). In some embodiments, in the case that the candidate frame rate is within the frequency range corresponding to the maximum output frame rate and the minimum output frame rate, the candidate frame rate is determined as the budget frame rate; in the case that the candidate frame rate is greater than the maximum output frame rate, the predetermined maximum output frame rate is determined as the budget frame rate; and in the case that the candidate frame rate is less than the minimum output frame rate, the predetermined minimum output frame rate is determined as the budget frame rate.

In some possible embodiments, the budget frame rate in the present embodiments is determined based on the following formula:

$$Fr_i = min(max(\frac{Br_i}{\overline{Fb_i}}, Fr_{min}), Fr_{max})$$

wherein $Fr_i$ represents the budget frame rate, $Br_i$ represents the encodable bitrate, $\overline{Fb_i}$ represents the single-frame image size, $Fr_{min}$ represents a predetermined minimum output frame rate, and $Fr_{max}$ represents a predetermined maximum output frame rate. The present disclosure constrains the value of the budget frame rate through the predetermined frame rate constraint condition, thereby ensuring the frame rate adjustment effect on the first capture frame data stream and ensuring the image encode effect.

In S103: a second capture frame data stream is acquired by adjusting a frame rate of a captured first capture frame data stream based on the budget frame rate.

In some embodiments, the captured first capture frame data stream is received, and the frame rate of the first capture frame data stream is adjusted based on the budget frame rate determined above, such that the frame rate corresponding to the second capture frame data stream corresponds to the budget frame rate. In some embodiments, the first capture frame data stream includes a plurality of consecutive raw encode frames captured by a camera, or a plurality of consecutive encode frames acquired by performing pre-processing (e.g., beauty processing) on the raw encode frames.

It is to be explained that by adjusting the frame rate of the first capture frame data stream based on the budget frame rate, in the case that the frame rate corresponding to the first capture frame data stream is increased, it is equivalent to increasing the encode bitrate output in equal proportion; and in the case that the frame rate corresponding to the first capture frame data stream is decreased, it is equivalent to decreasing the encode bitrate output in equal proportion. That is, adaptive adjustment of the encode bitrate is achieved by adjusting the frame rate of the capture frame data stream.

The present disclosure, by determining the encodable bitrate by combining the estimated bandwidth and the transmission buffer size and converting the encodable bitrate into a budget frame rate used for adjusting the frame rate of the capture frame, converts the bitrate control problem in the video encoding and transmitting process into a frame rate control problem, ensures a maximum bitrate and a minimum transmit delay, and achieves the real-time and accurate control of the encode bitrate. Relative to the network bandwidth responding method by adjusting the bitrate in a level of a group of images or by controlling encode parameters in real-time, the present disclosure achieves bitrate adjustments by adjusting, at the frame level, the bitrate of the capture frame data stream, thereby faster and more accurately responding to the changes in the network bandwidth without changing the encode parameter of the encoder and thus effectively ensuring the image encode quality.

In some possible embodiments, when adjusting the frame rate of the first capture frame data stream based on the budget frame rate, it is determined, based on the comparison result of the frame rate corresponding to the first capture frame data stream and the budget frame rate, whether to perform the frame interpolation processing or frame dropping processing on the first capture frame data stream. Based on this, in the present disclosure, acquiring the second capture frame data stream by adjusting the bitrate of the captured first capture frame data stream based on the budget frame rate includes:

in the case that the frame rate corresponding to the captured first capture frame data stream is less than the budget frame rate, acquiring the second capture frame data stream by performing the frame interpolation processing on the first capture frame data stream; or

in the case that the frame rate corresponding to the captured first capture frame data stream is greater than the budget frame rate, acquiring the second capture frame data stream by performing the frame dropping processing on the first capture frame data stream.

In some embodiments, the frame rate corresponding to the first capture frame data stream is compared with the budget frame rate, and in the case that the frame rate corresponding to the captured first capture frame data stream is less than the budget frame rate, the second capture frame data stream is acquired by performing the frame interpolation processing on the first capture frame data stream based on a predetermined frame interpolation algorithm. In the case that the frame rate corresponding to the first capture frame data stream is greater than the budget frame rate, the second capture frame data stream is acquired by performing the frame dropping processing on the first capture frame data stream based on a predetermined frame dropping algorithm. At this time, the frame rate corresponding to the second frame data stream is consistent with the budget frame rate. In the case that the frame rate corresponding to the first capture frame data stream is consistent with the budget frame rate, there is no need to adjust the frame rate of the first capture frame data stream, and the first capture frame data stream is directly determined as the second capture frame data stream.

The present disclosure makes the frame rate of the second capture frame data stream correspond to the budget frame rate by performing, based on the comparison result between the frame rate corresponding to the first capture frame data stream and the budget frame rate, the frame interpolation processing or the frame dropping processing on the first capture frame data stream, thereby achieving fast and accurately responding to the changes in network bandwidth, achieving accurate and timely bitrate control by adjusting the frame rate, reducing the transmit delay and play lag of the image encode data without impacting the quality of the encoded images, and improving the live streaming experience of users.

In some possible embodiments, subsequent to acquiring the second capture frame data stream by adjusting the frame rate of the captured first capture frame data stream based on the budget frame rate, the method for encoding control of the present disclosure further includes: acquiring an encoded image group by encoding based on the second capture frame data stream, and transmitting the encoded image group to a transmission window to allow the transmission window to output the encoded image group based on a predetermined congestion control strategy.

In some embodiments, subsequent to acquiring the second capture frame data stream by adjusting the frame rate of the captured first capture frame data stream based on the budget frame rate, the method further acquires the encoded image group by encoding, by the encoder, based on the second capture frame data stream, transmits the encoded image group to the transmission window, and output the encoded image group by the transmission window based on the predetermine congestion control strategy.

In some possible embodiments, in the method for encoding control of the present disclosure, acquiring the encoded image group by encoding based on the second capture frame data stream includes: inputting the second capture frame data stream to an encode queue; acquiring the second capture frame data stream from the encode queue, acquiring the encoded image group by encoding the acquired second capture frame data stream based on a predetermined encode parameter by the encoder, and transmitting the encoded image group to a transmission queue; and acquiring the encoded image group from the transmission queue and performing frame dropping processing on the acquired encoded image group based on a predetermined frame dropping strategy.

In some embodiments, subsequent to the second capture frame data stream being acquired by adjusting the frame rate of the acquired first capture frame data stream, the second capture frame data stream is input into the encode queue, the encoder acquires the second capture frame data stream from the encode queue and acquires the encoded image group by encoding the acquired second capture frame data stream based on the predetermined encode parameter. In some embodiments, the encode parameter includes one of a resolution, an encode bitrate, an encode frame rate, or a combination thereof. In some embodiments, the encoded image group acquired by encoding is transmitted to a transmission queue for transmission.

The encoded image group is acquired from the transmission queue and transmitted, the frame dropping processing is performed on the acquired encoded image group based on a predetermined frame dropping strategy, and the encoded image group, upon being subjected to the frame dropping processing, is transmitted. In some embodiments, the encoded image group is uploaded to a predetermined server, and the server transcodes the encoded image group and transmits corresponding video data to various user terminals (e.g., viewer terminals). By performing frame dropping processing on the acquired encoded image group, the present disclosure makes the output bitrate adapt to the network transmission capacity by smooth filtering and frame dropping, achieves a maximum video bitrate and a minimum transmit delay, and improves the real-time and smoothness of the user's live streaming on the basis of ensuring the video quality.

In some possible embodiments, subsequent to acquiring the encoded image group by encoding the acquired second capture frame data stream based on the predetermined encode parameter by the encoder, the method for encoding control in the present disclosure further includes: determining the single-frame image size based on a real-time image size of each encoded frame in the encoded image group generated by the encoder.

In some embodiments, in the case that the encoded image group is acquired by encoding the second capture frame data stream based on the predetermined encode parameter by the encoder, a real-time image size of each encoded frame in the encoded image group generated by the encoder is acquired, and a single-frame image size is determined based on the real-time image size of each encoded frame.

In some possible embodiments, in the method for encoding control of the present disclosure, determining the single-frame image size based on the real-time image size of each encoded frame in the encoded image group generated by the encoder includes: determining, based on a predetermined exponentially weighted moving average (EWMA) filter strategy, a current single-frame image size based on the real-time image size of each encoded frame in the encoded image group generated by the encoder and a single-frame image size determined last time.

In some embodiments, the single-frame image size in the present disclosure is calculated by performing EWMA filtering on the real-time image size $Fb_i$ of each image frame encoded and output by the encoder, i.e., $\overline{Fb_i} = \beta * \overline{Fb_{i-1}} + (1 - \beta) * Fb_i$, wherein $\overline{Fb_{i-1}}$ represents a single-frame image size determined last time, and $\beta$ represents a smoothing coefficient corresponding to the exponentially weighted moving average filtering. The present disclosure achieves the smoothing processing on the frame rate adjustment by calculating the current single-frame image size through the exponential weighted moving average filtering.

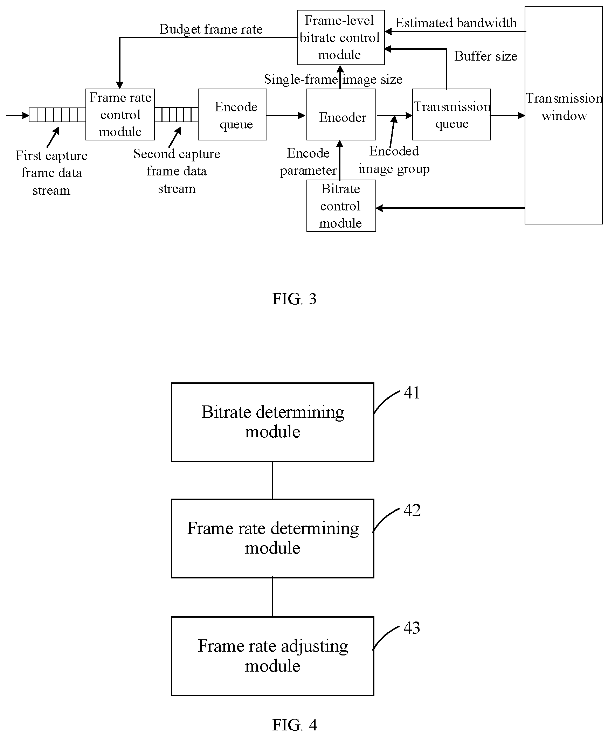

As shown in a schematic diagram of an encoding control network structure provided in FIG. 3, the encoding control network structure includes a frame-level bitrate control module, a frame rate control module, an encode queue, an encoder, a transmission queue, a transmission window, and a bitrate control module, wherein the frame-level bitrate control module acquires in real time the estimated bandwidth from the transmission window, the transmission buffer size from the transmission queue, and a single-frame image size actually encoded and output by the encoder, and the frame-level bitrate control module determines an encodable bitrate based on the estimated bandwidth, the transmission buffer size, the predetermined delay limit information, and the predetermined bitrate control information, determines a budget frame rate based on the encodable bitrate and the single-frame image size, and transmits the budget frame rate to the frame rate control module.

The frame rate control module acquires the second capture frame data stream by adjusting the frame rate of the captured first capture frame data stream based on the received budget frame rate and transmits the second capture frame data stream to the encode queue. The bitrate control module determines encode parameters based on the predetermined bitrate control algorithm and transmits the encode parameters to the encoder, and the encoder extracts the second capture frame data stream from the encode queue, encodes the second capture frame data stream based on the encode parameters to acquire the encoded image group, and transmits the encoded image group to the transmission queue. At the same time, the encoder determines a current single-frame image size through the predetermined exponentially weighted moving average filter strategy based on a real-time image size of each encoded frame in the real-time generated encoded image group and a single-frame image size determined last time and transmits the current single-frame image size to the frame-level bitrate control module. The transmission queue performs, based on a predetermined frame dropping strategy, frame dropping processing on the encoded image group from the encoder. The transmission window acquires the encoded image group that is subjected to the frame dropping processing from the transmission queue and uploads the encoded image group to a predetermined server based on a predetermined congestion control algorithm, and at the same time calculates the estimated bandwidth corresponding to the transmission link based on the predetermined congestion control algorithm and transmits the estimated bandwidth to the frame-level bitrate control module.

As described above, an encodable bitrate is determined based on the estimated bandwidth, the transmission buffer size, predetermined delay limit information, and predetermined bitrate control information, a budget frame rate is determined based on the single-frame image size, and a second capture frame data stream is acquired by adjusting a frame rate of a captured first capture frame data stream based on the budget frame rate. That is, the frame rate corresponding to the captured first capture frame data stream is adjusted to quickly adapt, at a frame level, to the estimated bandwidth of the transmission link and the transmission buffer size of the transmission queue, thereby timely corresponding to the changes in the network bandwidth, reducing the fluctuation of the transmission queue cache, and effectively improving the image encode quality. At the same time, by controlling the outputs of the frame rate and bitrate, precise control of the bitrate and the transmit delay are achieved on the premise of not changing the encode parameters and the encode quality. Moreover, a bitrate adjustment effect is achieved by adjusting, at a frame level, a frame rate of the capture frame data stream, therefore the changes in the network bandwidth are responded to faster and more accurately without changing the encode parameters of the encoder, and the image encode quality are effectively ensured.

FIG. 4 is a schematic structural diagram of an apparatus for encoding control according to some embodiments of the present disclosure. Referring to FIG. 4, the apparatus for encoding control includes a bitrate determining module 41, a frame rate determining module 42, and a frame rate adjusting module 43.

The bitrate determining module 41 is configured to acquire an estimated bandwidth corresponding to a transmission link and a transmission buffer size corresponding to a transmission queue, and determine an encodable bitrate based on the estimated bandwidth, the transmission buffer size, predetermined delay limit information, and predetermined bitrate control information; the frame rate determining module 42 is configured to acquire a single-frame image size corresponding to encoding processing by an encoder, and determine a budget frame rate based on the encodable bitrate and the single-frame image size; and the frame rate adjusting module 43 is configured to acquire a second capture frame data stream by adjusting a frame rate of a captured first capture frame data stream based on the budget frame rate.

As described above, an encodable bitrate is determined based on the estimated bandwidth, the transmission buffer size, predetermined delay limit information, and predetermined bitrate control information, a budget frame rate is determined based on the single-frame image size, and a second capture frame data stream is acquired by adjusting a frame rate of a captured first capture frame data stream based on the budget frame rate. That is, the frame rate corresponding to the captured first capture frame data stream is adjusted to quickly adapt, at a frame level, to the estimated bandwidth of the transmission link and the transmission buffer size of the transmission queue, thereby timely corresponding to the changes in the network bandwidth, reducing the fluctuation of the transmission queue cache, and effectively improving the image encode quality.

On the basis of the above embodiments, the bitrate determining module 41, when determining the encodable bitrate based on the estimated bandwidth, the transmission buffer size, the predetermined delay limit information, and the predetermined bitrate control information, is configured to:

determine a reserved cache data volume based on the estimated bandwidth, the transmission buffer size, and the predetermined delay limit information; and

determine the encodable bitrate based on the reserved cache data volume, the estimated bandwidth, and the predetermined bitrate control information.

On the basis of the above embodiments, the reserved cache data volume is determined based on the following formula:

$$Cm_i = C_i - B_i * L_{max}$$

wherein $B_i$ represents the estimated bandwidth, $C_i$ represents the transmission buffer size, and $L_{max}$ represents the delay limit information; and

the encodable bitrate is determined based on the following formula:

$$Br_i = \frac{B_i * T - Cm_i}{T}$$

wherein T represents the bitrate control information.

On the basis of the above embodiments, the frame rate determining module 42, when determining the budget frame rate based on the encodable bitrate and the single-frame image size, is configured to:

determine a candidate frame rate based on the encodable bitrate and the single-frame image size; and determine the budget frame rate based on a predetermined frame rate constraint condition and the candidate frame rate.

Based on the above embodiments, the frame rate adjusting module 43 is configured to:

acquire the second capture frame data stream by performing frame interpolation processing on the first capture frame data stream in a case where the frame rate corresponding to the captured first capture frame data stream is smaller than the budget frame rate; or acquire the second capture frame data stream by performing frame dropping processing on the first capture frame data stream in a case where the frame rate corresponding to the captured first capture frame data stream is greater than the budget frame rate.

On the basis of the above embodiments, the apparatus for encoding control further includes an image transmitting module, wherein the image transmitting module is configured to acquire an encoded image group by encoding based on the second capture frame data stream and transmit the encoded image group to a transmission window to allow the transmission window to output the encoded image group based on a predetermined congestion control strategy.

On the basis of the above embodiments, the image transmitting module, when acquiring the encoded image group by encoding based on the second capture frame data stream, is configured to:

> input the second capture frame data stream to an encode queue;
> acquire the second capture frame data stream from the encode queue, acquire the encoded image group by encoding the acquired second capture frame data stream based on a predetermined encode parameter by the encoder, and transmit the encoded image group to a transmission queue; and
> acquire the encoded image group from the transmission queue, and perform frame dropping processing on the acquired encoded image group based on a predetermined frame dropping strategy.

On the basis of the above embodiments, the apparatus for encoding control further includes an image size calculating module, the image size calculating module being configured to determine the single-frame image size based on a real-time image size of each encoded frame in the encoded image group generated by the encoder.

On the basis of the above embodiments, the image size calculating module, when determining the single-frame image size based on the real-time image size of each encoded frame in the encoded image group generated by the encoder, is configured to determine, based on a predetermined exponentially weighted moving average filter strategy, a current single-frame image size based on the real-time image size of each encoded frame in the encoded image group generated by the encoder and a single-frame image size determined last time.

It is noted that, in the above embodiments of the apparatus for encoding control, the various units and modules included are only divided according to functional logic, but the apparatus is not limited to the above division, as long as the corresponding functions can be achieved; furthermore, the specific names of the functional units are only for the purpose of differentiation from each other, and are not used to limit the scope of protection of the embodiments of the present disclosure.

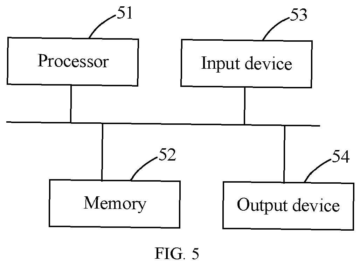

Embodiments of the present disclosure further provide a device for encoding control. The device for encoding control integrates the apparatus for encoding control provided by embodiments of the present disclosure. FIG. 5 is a schematic structural diagram of the device for encoding control according to embodiments of the present disclosure. Referring to FIG. 5, the device for encoding control includes: an input device 53, an output device 54, a memory 52, and one or more processors 51; the memory 52 is configured to store one or more programs; wherein the one or more programs, when loaded and run by the one or more processors 51, cause the one or more processors 51 to perform the method for encoding control provided by the above embodiments. The above-provided apparatus, device, and computer for encoding control are configured to perform the method for encoding control provided in any of the above embodiments and achieve corresponding functions and beneficial effects.

Embodiments of the present disclosure further provide a non-transitory storage medium storing one or more computer-executable instructions, wherein the one or more computer-executable instructions, when loaded and run by a processor of a computer, cause the computer to perform the method for encoding control as provided in the above embodiments. Of course, the one or more computer-executable instructions stored in the non-transitory storage medium provided by the embodiments of the present disclosure are not limited to the method for encoding control as provided above but can achieve relevant operations in the method for encoding control provided in any embodiment of the present disclosure. The apparatus and device for encoding control and the storage medium provided in the above embodiments are configured to perform the method for encoding control provided in any embodiment of the present disclosure, and technical details not exhaustively described in the above embodiments can refer to the method for encoding control provided in any embodiment of the present disclosure.

On the basis of the above embodiments, embodiments of the present disclosure further provide a computer program product. In some embodiments, the essence of the technical solution of the present disclosure, a part of the present disclosure that contributes to the prior art, or all or part of the technical solution is implemented in the form of a software product. The computer program product is stored in a storage medium. The computer program product includes one or more instructions, wherein the one or more instructions, when loaded and run by a processor of a computer device or a mobile terminal, cause the computer device, the mobile terminal, or the processor to perform all or part of the processes of the method for encoding control of various embodiments of the present disclosure.

## Claims

1.  A method for encoding control, comprising:

> acquiring an estimated bandwidth corresponding to a transmission link and a transmission buffer size corresponding to a transmission queue, and determining an encodable bitrate based on the estimated bandwidth, the transmission buffer size, predetermined delay limit information, and predetermined bitrate control information;
> acquiring a single-frame image size corresponding to encoding processing by an encoder, and determining a budget frame rate based on the encodable bitrate and the single-frame image size; and

acquiring a second capture frame data stream by adjusting a frame rate of a captured first capture frame data stream based on the budget frame rate.

2. The method according to claim 1, wherein determining the encodable bitrate based on the estimated bandwidth, the transmission buffer size, the predetermined delay limit information, and the predetermined bitrate control information comprises:

determining a reserved cache data volume based on the estimated bandwidth, the transmission buffer size, and the predetermined delay limit information; and
determining the encodable bitrate based on the reserved cache data volume, the estimated bandwidth, and the predetermined bitrate control information.

3. The method according to claim 2, wherein the reserved cache data volume is determined based on the following formula:

$$Cm_i = C_i - B_i * L_{max}$$

wherein $B_i$ represents the estimated bandwidth, $C_i$ represents the transmission buffer size, and $L_{max}$ represents the delay limit information; and the encodable bitrate is determined based on the following formula:

$$Br_i = \frac{B_i * T - Cm_i}{T}$$

wherein $T$ represents the bitrate control information.

4. The method according to claim 1, wherein determining the budget frame rate based on the encodable bitrate and the single-frame image size comprises:

determining a candidate frame rate based on the encodable bitrate and the single-frame image size; and
determining the budget frame rate based on a predetermined frame rate constraint condition and the candidate frame rate.

5. The method according to claim 1, wherein acquiring the second capture frame data stream by adjusting the frame rate of the captured first capture frame data stream based on the budget frame rate comprises:

acquiring the second capture frame data stream by performing frame interpolation processing on the first capture frame data stream in a case where the frame rate corresponding to the captured first capture frame data stream is smaller than the budget frame rate; or
acquiring the second capture frame data stream by performing frame dropping processing on the first capture frame data stream in a case where the frame rate corresponding to the captured first capture frame data stream is greater than the budget frame rate.

6. The method according to claim 1, wherein subsequent to acquiring the second capture frame data stream by adjusting the frame rate of the captured first capture frame data stream based on the budget frame rate, the method further comprises:
acquiring an encoded image group by encoding based on the second capture frame data stream, and transmitting the encoded image group to a transmission window to allow the transmission window to output the encoded image group based on a predetermined congestion control strategy.

7. The method according to claim 6, wherein acquiring the encoded image group by encoding based on the second capture frame data stream comprises:

inputting the second capture frame data stream to an encode queue;
acquiring the second capture frame data stream from the encode queue, acquiring the encoded image group by encoding the acquired second capture frame data stream based on a predetermined encode parameter by the encoder, and transmitting the encoded image group to a transmission queue; and
acquiring the encoded image group from the transmission queue, and performing frame dropping processing on the acquired encoded image group based on a predetermined frame dropping strategy.

8. The method according to claim 7, wherein subsequent to acquiring the encoded image group by encoding the acquired second capture frame data stream based on the predetermined encode parameter by the encoder, the method further comprises:
determining the single-frame image size based on a real-time image size of each encoded frame in the encoded image group generated by the encoder.

9. The method according to claim 8, wherein determining the single-frame image size based on the real-time image size of each encoded frame in the encoded image group generated by the encoder comprises:
determining, based on a predetermined exponentially weighted moving average (EWMA) filter strategy, a current single-frame image size based on the real-time image size of each encoded frame in the encoded image group generated by the encoder and a single-frame image size determined last time.

10. An apparatus for encoding control, comprising: a bitrate determining module, a frame rate determining module, and a frame rate adjusting module; wherein:

the bitrate determining module is configured to acquire an estimated bandwidth corresponding to a transmission link and a transmission buffer size corresponding to a transmission queue, and determine an encodable bitrate based on the estimated bandwidth, the transmission buffer size, predetermined delay limit information, and predetermined bitrate control information;

the frame rate determining module is configured to acquire a single-frame image size corresponding to encoding processing by an encoder, and determine a budget frame rate based on the encodable bitrate and the single-frame image size; and

the frame rate adjusting module is configured to acquire a second capture frame data stream by adjusting a frame rate of a captured first capture frame data stream based on the budget frame rate.

11. A device for encoding control, comprising: a memory and one or more processors; wherein

the memory stores one or more programs; wherein the one or more programs, when loaded and run by the one or more processors, cause the one or more processors to perform the method for encoding control as defined in any one of claims 1 to 9.

12. A non-transitory storage medium storing one or more computer-executable instructions, wherein the one or more computer-executable instructions, when loaded and run by a processor of a computer, cause the computer to perform the method for encoding control as defined in any one of claims 1 to 9.

13. A computer program product, comprising one or more computer programs, wherein the one or more computer programs, when loaded and run by a processor, cause the processor to perform the method for encoding control as defined in any one of claims 1 to 9.

Acquiring an estimated bandwidth corresponding to a transmission link and a transmission buffer size corresponding to a transmission queue, and determining an encodable bitrate based on the estimated bandwidth, the transmission buffer size, predetermined delay limit information, and predetermined bitrate control information ⟋ S101

Acquiring a single-frame image size corresponding to encoding processing by an encoder, and determining a budget frame rate based on the encodable bitrate and the single-frame image size ⟋ S102

Acquiring a second capture frame data stream by adjusting a frame rate of a captured first capture frame data stream based on the budget frame rate ⟋ S103

FIG. 1

Determining a reserved cache data volume based on the estimated bandwidth, the transmission buffer size, and the predetermined delay limit information ⟋ S1011

Determining the encodable bitrate based on the reserved cache data volume, the estimated bandwidth, and the predetermined bitrate control information ⟋ S1012

FIG. 2

FIG. 3

FIG. 4

51

Processor

53

Input device

52

Memory

54

Output device

FIG. 5

## INTERNATIONAL SEARCH REPORT

| | International application No. |
|---|---|
| | **PCT/CN2023/133721** |

### A. CLASSIFICATION OF SUBJECT MATTER

H04N 19/146(2014.01)i; H04N 19/164(2014.01)i; H04N 19/152(2014.01)i; H04N21/2343(2011.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, CNKI, VEN, WPABS, ENTXT: 估算, 带宽, 缓冲, 缓存, 大小, 数量, 延时, 延迟, 限制, 上限, 阈值, 码率, 比特率, 调整, 调节, 时间, 周期, 频率, 间隔, 单帧, 图像, 数据量, 帧率, 丢帧, 插帧, estimate, bandwidth, buffer, size, quantity, delay, limit, max, threshold, code rate, bit rate, adjust, time, period, frequency, interval, frame, image, data amount, frame rate, frame loss, frame insertion

### C. DOCUMENTS CONSIDERED TO BE RELEVANT

| Category* | Citation of document, with indication, where appropriate, of the relevant passages | Relevant to claim No. |
|---|---|---|
| PX | CN 115883848 A (GUANGZHOU BAIGUOYUAN NETWORK TECHNOLOGY CO., LTD.) 31 March 2023 (2023-03-31) <br> claims 1-13, and description, paragraphs [0024]-[0100] | 1-13 |
| Y | CN 113055698 A (BAIGUOYUAN TECHNOLOGY (SINGAPORE) PTE LTD.) 29 June 2021 (2021-06-29) <br> description, paragraphs [0029]-[0036], [0082], [0085], and [0123]-[0131] | 1-2, 4-8, 10-13 |
| Y | CN 111212308 A (ZHUHAI RAYSHARP TECHNOLOGY CO., LTD.) 29 May 2020 (2020-05-29) <br> description, paragraph [0036] | 1-2, 4-8, 10-13 |
| Y | CN 113489981 A (UNIVERSITY OF ELECTRONIC SCIENCE AND TECHNOLOGY OF CHINA) 08 October 2021 (2021-10-08) <br> description, paragraph [0067] | 1-2, 4-8, 10-13 |

☑ Further documents are listed in the continuation of Box C.    ☑ See patent family annex.

| | |
|---|---|
| *   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **06 March 2024** | **06 March 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/133721** |

### C. DOCUMENTS CONSIDERED TO BE RELEVANT

| Category* | Citation of document, with indication, where appropriate, of the relevant passages | Relevant to claim No. |
|---|---|---|
| A | CN 106713345 A (SHENZHEN CLOUD VISION TECHNOLOGY CO., LTD.) 24 May 2017 (2017-05-24) entire document | 1-13 |
| A | WO 2022152137 A1 (BIGO TECHNOLOGY PTE. LTD.; ZHANG KAIMING) 21 July 2022 (2022-07-21) entire document | 1-13 |

Form PCT/ISA/210 (second sheet) (July 2022)

**INTERNATIONAL SEARCH REPORT**
Information on patent family members

International application No.

**PCT/CN2023/133721**

| Patent document cited in search report | | | Publication date (day/month/year) | Patent family member(s) | Publication date (day/month/year) |
|---|---|---|---|---|---|
| CN | 115883848 | A | 31 March 2023 | None | |
| CN | 113055698 | A | 29 June 2021 | None | |
| CN | 111212308 | A | 29 May 2020 | None | |
| CN | 113489981 | A | 08 October 2021 | None | |
| CN | 106713345 | A | 24 May 2017 | None | |
| WO | 2022152137 | A1 | 21 July 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211576455